# EUROPÄISCHE PATENTANMELDUNG

(11) **EP 3 788 856 A1**
(43) Veröffentlichungstag der Anmeldung: **10.03.2021**
(21) Anmeldenummer: 20194010.3
(22) Anmeldetag: 02.09.2020
(51) Int. Cl.: A01D 17/10

(54) **ERNTEMASCHINE FÜR FELDFRÜCHTE**

(30) Priorität: 03.09.2019 DE 102019123496
(71) Anmelder: Wöhler, Stefan, 32107 Bad Salzuflen (DE)
(72) Erfinder: Wöhler, Stefan, 32107 Bad Salzuflen (DE)
(74) Vertreter: Brandt, Detlef

(57) **Zusammenfassung**

Es wird eine Erntemaschine für Feldfrüchte wie Kartoffeln, Rüben oder dergleichen mit einer Rodevorrichtung (1) und mindestens einem, das gerodete Gemisch aus Feldfrüchten und Beimengungen aufnehmenden endlosen Stabsiebförderband (2), welches ein oberes, zum Transport des gerodeten Gemisches vorgesehenes Lasttrum (3) und ein unteres Leertrum (4) aufweist, wobei das Stabsiebförderband (2) über mindestens eine in Fahrtrichtung gesehenen vordere Umlenkrolle (5) und eine hintere Umlenkrolle (6) geführt ist und durch einen Antrieb in seiner Geschwindigkeit variierbar ist, vorgestellt, bei der erfindungsbemäß im Zwischenraum (10) zwischen Lasttrum (3) und Leertrum (4) des Stabsiebförderbandes (2) ein zum Lasttrum (3) im Abstand veränderbar einstellbares und in seiner Geschwindigkeit variierbares Transportband (11) zur Aufnahme von durch das Stabsiebförderband (2) abgesiebten Beimengungen angeordnet ist.

## Beschreibung

### Technisches Umfeld

Die Erfindung betrifft eine Erntemaschine für Feldfrüchte wie Kartoffeln, Rüben oder dergleichen mit einer Rodevorrichtung und mindestens einem, das gerodete Gemisch aus Feldfrüchten und Beimengungen aufnehmenden endlosen Stabsiebförderband, welches ein oberes, zum Transport des gerodeten Gemisches vorgesehenes Lasttrum und ein unteres Leertrum aufweist, wobei das Stabsiebförderband über mindestens eine in Fahrtrichtung gesehen vordere Umlenkrolle und eine hintere Umlenkrolle geführt ist und durch einen Antrieb in seiner Geschwindigkeit variierbar ist.

### Stand der Technik

Maschinen der eingangs geschilderten Art zum Ernten von Kartoffeln, Rüben oder vergleichbaren Erntefrüchten beinhalten unterschiedliche Ausführungen von mechanischen Aggregaten, mit denen das aus dem Boden gerodete Erntegut von dabei zusätzlich erfassten Beimengungen wie Steinen, Kluten oder grünen Bestandteilen wie Kraut oder dergleichen getrennt wird.

Dabei wird bei bekannten Systemen das Rodegemisch beispielsweise aus einem Kartoffeldamm mittels einer Schar ausgehoben und auf einem Stabsiebförderband, welches in Fahrtrichtung gesehen der Rodevorrichtung nachgeschaltet ist, abgelegt.

Das Gemisch aus Erntegut und Beimengungen ist dabei auf dem Stabsiebförderband in seinen Bestandteilen so zu dosieren, dass der vorhandene Erdanteil einerseits keine Verstopfungen beim Weitertransport des Rodegemisches hervorruft. Gleichzeitig sollte auf dem Stabsiebförderband jedoch so viel Erdanteil vorhanden sein, dass ein schonender Transport des Erntegutes gewährleistet ist. Gerade das letztgenannte Kriterium ist insbesondere bei der Kartoffelernte wichtig, da geerntete Kartoffeln bei unsachgemäßem Transport während des Siebvorganges auf dem Stabsiebförderband infolge von zu wenig Erdanteil oder zu hoher Geschwindigkeit sehr schnell Druckstellen erhalten, die die Qualität des Erntegutes negativ beeinflussen.

Problematisch bei der Zielvorgabe eines schonenden Transportes und eines reibungslosen Erntevorganges ist es dabei, dass die Qualität des Erdreiches, aus dem das Erntegut durch die gattungsgemäßen Erntemaschinen entnommen wird, von sehr unterschiedlicher Beschaffenheit ist. Die unterschiedliche Beschaffenheit ergibt sich aus verschiedener Zusammensetzung des Erntebodens infolge von Lehm- und Sandanteilen und durch einen unterschiedlichen Feuchtegrad des Erdreiches, so dass gegebenenfalls innerhalb von aufeinanderfolgenden Erntetagen die Bedingungen für eine saubere und schonende Trennung des Erntegutes von den mit gerodeten Beimengungen vollkommen unterschiedliche Rahmenbedingungen erfordern kann.

Die Rahmenbedingungen sind charakterisiert durch die Veränderung der Bandgeschwindigkeiten des Stabsiebförderbandes, die Vorfahrtgeschwindigkeit des Zugfahrzeuges und gegebenenfalls durch unterschiedliche Abstände der Stäbe des verwendeten Stabsiebförderbandes. Gerade das letztgenannte Kriterium kann nur durch einen Austausch des Stabsiebförderbandes gegen ein anderes mit kleinerem oder größerem Stababstand verändert werden, was naturgemäß mit hohem Arbeitsaufwand verbunden ist.

Es hat sich in der Praxis gezeigt, dass bei extremen Wetterbedingungen wie beispielsweise sehr großer Trockenheit oder sehr großer Niederschlagsmenge die geschilderten Einflussfaktoren oftmals nicht ausreichen, um eine für den Transport des Erntegutes ausreichenden Beimengungsanteil abzusieben (bei feuchtem Erdreich) oder aber beizubehalten (bei trockenem Boden).

### Aufgabe der Erfindung

Ausgehend von den oben geschilderten Schwierigkeiten, herkömmliche Erntemaschinen für unterschiedliches Erdreich hinsichtlich ihrer Einflussfaktoren so einzustellen, dass das Erntegut möglichst unbeschadet den Ernteprozess übersteht und darüberhinaus einen effizienten und schnellen Erntevorgang zu gewährleisten, besteht die Aufgabe der Erfindung darin, eine Erntemaschine der gattungsgemäßen Art so weiter zu entwickeln, dass ein Austausch der in herkömmlichen Erntemaschinen verwendeten Stabsiebförderbänder bei unterschiedlichen Anwendungsfällen vermieden wird und gleichzeitig bei unterschiedlichen Qualitäten des Erdreiches das Erntegut immer auf einem ausreichenden Erdpolster transportiert wird, ohne dass die Gefahr einer Verstopfung der Erntemaschine besteht.

### Lösung der Aufgabe

Die beschriebene Aufgabe wird für eine Erntemaschine mit den gattungsbildenden Merkmalen durch die im kennzeichnenden Teil des Anspruches 1 beschriebene technische Lehre gelöst.

Erfindungswesentlich dabei ist es, dass bei dem verwendeten Stabsiebförderband im Zwischenraum zwischen Lasttrum und Leertrum ein zum Lasttrum im Abstand veränderbar einstellbares und in seiner Geschwindigkeit variierbares Transportband zur Aufnahme von durch das Stabsiebförderband abgesiebten Beimengungen angeordnet ist.

Die erfindungsgemäße Gestaltung ermöglicht es, durch Abstandsvariationen des neuartigen zusätzlichen Transportbandes in Verbindung mit dessen Geschwindigkeitsregulierung einen sogenannten Teppich aus Erdreich auf dem Transportband zu schaffen, der zwischen den Stäben des Stabsiebförderbandes hindurchreicht und einen schonenden Transport des Erntegutes gewährleistet.

Wird beispielsweise durch die Rodevorrichtung viel Erde auf dem Stabsiebförderband abgelegt, kann die Umlaufgeschwindigkeit des zusätzlichen Transportbandes erhöht werden, um die durch die Zwischenräume der Stäbe fallende Erde in größerer Menge abzutragen. Außerdem kann in einem solchen Fall der Abstand des Transportbandes erhöht werden, so dass mehr Erde Platz auf diesem findet und entfernt werden kann.

Die Vergrößerung der Geschwindigkeit sowie des Abstandes zwischen Stabsiebförderband und Transportband ermöglicht eine bessere Trennung vom Erntegut bei nassen Witterungsverhältnissen und daraus resultierenden schweren Böden und großem Beimengungsanteil.

Wird aufgrund anderer Witterungsverhältnisse und daraus resutiernden trockene Böden durch die Rodevorrichtung entsprechend wenig Erde auf dem Stabsiebförderband abgelegt, kann das unter diesem liegende Transportband in seiner Umlaufgeschwindigkeit verlangsamt und das Band nah unter das obere Stabsiebförderband gefahren werden. Das Erntegut bleibt somit auf einem ausreichenden Erdpolster liegen und kann schonender nach hinten zur weiteren Trennung von Erntegut und Beimengungen gebracht werden.

Besondere Ausgestaltungen des Erfindungsgegenstandes ergeben sich in Zusammenschau mit der technischen Lehre des Anspruches 1 zusätzlich aus den Merkmalen der auf den Hauptanspruch rückbezogenen Unteransprüche.

Es hat sich insbesondere als vorteilhaft erwiesen, wenn das Transportband an seinem in Fahrtrichtung gesehen vorderen, der vorderen Umlenkrolle des Stabsiebförderbandes benachbarten Ende einen Abstand zum Lastrum des Stabsiebförderbandes von 3 cm - 10 cm aufweist.

Es hat sich in der Praxis gezeigt, dass es ausreicht, die Variation des Abstandes zwischen Transportband und Stabsiebförderband im hinteren, der vorderen Umlenkrolle abgewandten Ende variabel zu gestalten, so dass sich hier ein Abstand von 3 bis 30 cm einstellen lässt. Auf diese Weise lässt sich die Verstellvorrichtung für den Abstand konstruktiv einfacher gestalten. Gegebenenfalls kann für den Fall, dass im vorderen Bereich des Transportbandes ein erhöhten Erdaufkommen vorhanden ist, die Abtransportgeschwindigkeit gesteigert werden.

Als zweckmäßig hat es sich darüber hinaus erwiesen, wenn zwischen in Fahrtrichtung gesehen vorderem Ende des Transportbandes und dem Mittelpunkt der vorderen Umlenkrolle des Stabsiebförderbandes ein Abstand im Bereich von 5 cm - 50 cm einstellbar ist. Bei vergrößertem Abstand ergibt sich die Möglichkeit, schon zu Beginn unmittelbar nach der Ablage des gerodeten Gemisches insbesondere bei hohem Erdanteil nicht benötigte Erde vor dem Beginn des Transportbandes gleich zu Beginn abzusieben.

Da die Variabilität der erfindungsgemäßen Vorrichtung im Wesentlichen durch die Einstellbarkeit des neuartigen Transportbandes gegeben ist, reicht es im Zusammenhang mit der Anordnung des Transportbandbeginns meist aus, dies in Abhängigkeit ggfls. des Stababstandes zwar einstellbar, aber nicht automatisiert veränderbar zu gestalten. Die Höheneinstellbarkeit des Transportbandes bezogen auf die Lage des Stabsiebförderbandes wird vorteilhafterweise je nach Möglichkeit des Zugfahrzeuges elektrisch oder hydraulisch mittels eines Stellmotors vorgenommen. Ebenso kann das Transportband elektrisch oder hydraulisch angetrieben sein.

Für die Gestaltung des Transportbandes bestehen unterschiedliche Möglichkeiten. Als einfachste Variante hat es sich in der Praxis als vorteilhaft erwiesen, das Transportband ohne Durchbrechung geschlossen auszubilden.

Darüber hinaus besteht natürlich die Möglichkeit, in Analogie des Stabsiebförderbandes auch das Transportband mit Stäben auszustatten, die allerdings einen entsprechend geringen Abstand zueinander haben sollten. Die Verwendung von Stäben aus Stahl erhöht naturgemäß die Stabilität des Transportbandes und vermindert die Gefahr von Beschädigungen infolge von in der Erdbeimengung des gerodeten Gemisches enthaltenen Scherben, Steinen oder dergleichen.

Werden für das Transportband parallel zueinander angeordnete Stäbe verwendet, so sollte der Stababstand im Bereich von 5 mm - 50 mm liegen, da sich dies in der Praxis als vorteilhaft ergeben hat.

Um die Variabilität der erfindungsgemäßen Erntemaschine und den Automatisierungsgrad für optimale Ernteverhältnisse zusätzlich zu erhöhen, hat es sich entsprechend einer weiteren vorteilhaften Weiterbildung der Erfindung als hilfreich erwiesen, die hintere Umlenkrolle des Stabsiebförderbandes mit einer Wiegevorrichtung zur Ermittlung des auf dem Stabsiebförderband transportierten gerodeten Gemisches zu versehen. Die Wiegevorrichtung wird mit einer Regelvorrichtung zur Steuerung der Geschwindigkeit und Höhe des Transportbandes gekoppelt, so dass sowohl bei trockenem als auch feuchtem Erdgut eine automatische Anpassung von Geschwindigkeit und Abstand erreicht werden kann, um unter allen Rahmenbedingungen einen Auflageteppich für das empfindliche Erntegut auf dem Stabsiebförderband bereitzustellen.

Da wie bereits eingangs geschildert auch die Fahrgeschwindigkeit des Zugfahrzeuges, welches für die Fortbewegung der erfindungsgemäßen Erntevorrichtung eingesetzt wird, insbesondere im Hinblick auf optimal wirtschaftliche Ernteprozesse nicht unbedeutend ist, sieht eine weitere vorteilhafte Ausgestaltung des Gegenstandes der Erfindung vor, die Wiegevorrichtung mit einer Kontroll- und Ansteuereinheit für die Geschwindigkeit des Zugfahrzeuges für die Erntemaschine zu koppeln.

Durch die geschilderten speziellen Ausgestaltungen der technischen Lehre der Erfindung können viele in der Landwirtschaft tätigen Betriebe oder Lohnunternehmen bewirtschaftete Flächen mit unterschiedlichen Bodenbedingungen, sei es mit sandiger oder mit lehmiger Konsistenz, optimal bearbeiten.

Es ist nicht mehr wie bislang notwendig, mittels eines relativ kleinen Abstandes der Stäbe des Stabsiebförderbandes beim Kauf einer Maschine diese auf kartoffelschonende Arbeitsweise bei sandigen Böden auszurichten, was zwangsläufig eine Leistungsverringerung der Erntemaschine bei lehmigen Böden mit sich bringt. Ein Wechsel des Stabsiebförderbandes, welches hier Abhilfe schaffen könnte, wird in aller Regel in der Praxis aus zeitlichen Gründen nicht vorgenommen.

Gegenüber diesem Stand der Technik bietet die Erfindung den Vorteil, dass die Stabteilung des Stabsiebförderbandes nunmehr kompromisslos der zu liefernden Kartoffelmindestgröße angepasst werden kann, d.h. für die Lieferung von Kartoffeln ab 30 mm wird ein Abstand der Stäbe des Stabsiebförderbandes von 30 mm gewählt und bestellt. Die Teilung des Stabsiebförderbandes kann dann für die gesamte Erntesaison identisch bleiben, da die notwendige Erdmenge für einen schonenden Transport des Erntegutes über das zusätzliche Transportband innerhalb des Innenraumes des Stabsiebförderbandes durch die Einflussnahme auf die Geschwindigkeit und den Abstand des Transportbandes geregelt werden kann. Ein Austausch des Stabsiebtransportbandes zur Anpassung an unterschiedliche Rahmenbedingungen ist somit nicht mehr notwendig.

Darüber hinaus hat die erfinderische Lehre den Vorteil, den Automatisierungsgrad in der Landwirtschaft weiter erhöhen zu können, da die Verwendung der oben erwähnten Wiegevorrichtung eine autonome automatische Einstellung der Erntemaschine ermöglicht und dem Fahrer somit die Bedienung der Maschine erleichtert.

Selbstverständlich können bereits vorhandene Besonderheiten bei herkömmlichen Erntemaschinen beibehalten werden, beispielsweise können vorhandene Rüttelvorrichtungen, die das Stabsiebförderband in Schwingungen versetzen, in das automatische System der erfindungsgemäßen Erntemaschine integriert werden. Dies wird in erster Linie dann notwendig sein, sofern sich trotz angepasster Einstellung des Transportbandes noch ein zu großer Erdanteil auf dem ersten Siebband befindet. In diesem Fall würde das Einschalten der Rüttelvorrichtung Abhilfe schaffen.

Bei vielen technischen Realisierungen von Erntemaschinen wird dem ersten Stabsiebförderband an seinem in Fahrtrichtung hinteren Ende ein weiteres Transportband zugeordnet, welches ebenfalls ein oberes Lasttrum und ein unteres Leertrum aufweist, endlos gestaltet ist und mittels einer in Fahrtrichtung gesehenen vorderen Umlenkrolle und einer hinteren Umlenkrolle geführt wird.

Die beschriebene Anordnung kann dazu führen, dass das zu transportierende Erntegut beim Übergang vom ersten Stabsiebförderband auf das Transportband nicht auf ein Erdpolster fällt, sondern direkt auf die Stäbe des Transporttbandes prallt (sofern das Transportband ebenfalls mit nebeneinander parallel beabstandeten Stäben versehen ist).

Um hier Abhilfe zu schaffen, kann es zweckmäßig sein, in den Innenraum des Transportbandes zwischen dessen Lasttrum und Leertrum ein Erdpolstertransportband anzuordnen. Dieses Erdpolstertransportbank führt zu einem Erdpolster im Übergangsbereich des Erntegutes vom Stabsiebförderband zum Transportband und vermeidet Druckstellen und sonstige Beschädigungen des Erntegutes.

In der Praxis hat es sich als vorteilhaft erwiesen, wenn das Erdpolstertransportband eine Länge von 30 bis 100 cm aufweist und direkt an der Übergabestelle vom vom Stabsiebförderband zum Transportband platziert ist.

Für den Fall, dass das Transportband eine größere Steigung im Bereich von 30 Grad und mehr aufweisen sollte, kann das Erdpolstertransportband zusätzlich an seiner Außenseite mit einer Mehrzahl von nach außen vorstehenden, rechtwinklig zur Bewegungsrichtung des Ertpolstertransportbandes angeordneten Mitnahmestegen versehen werden. Sie sorgen dafür, dass die Erde auf dem Erdpolstertransportband nicht entgegen der Umlaufrichtung des Bandes nach unten wegrutscht und somit den Polstereffekt im Bereich des Erntegutüberganges herabsetzt.

### Figurenbeschreibung

Nachfolgend wird ein Ausführungsbeispiel des Gegenstandes der Erfindung anhand der beigefügten Zeichnungen näher erläutert. Es zeigt:
- Figur 1: eine schematische Darstellung wesentlicher Komponenten der erfindungsgemäßen Erntemaschine und
- Figur 2: eine schematische Darstellung einer erfindungsgemäßen technischen Erweiterung der Erntemaschine aus Figur 1

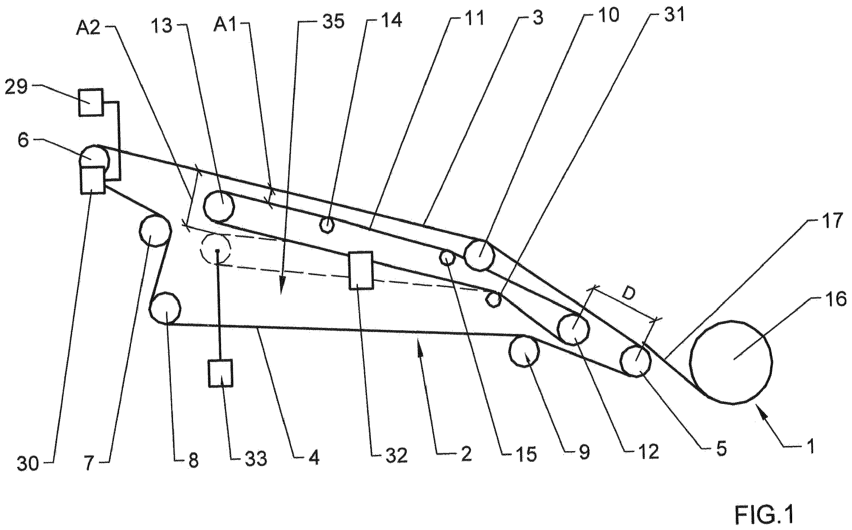

In der Figur 1 ist in stark schematisierter Darstellung eine erfindungsgemäße Erntemaschine mit ihren wesentlichen gattungs- und erfindungsgemäßen Merkmalen dargestellt.

An ihrem in Fahrtrichtung F gesehen vorderen Ende besitzt die Erntemaschine eine Rodevorrichtung 1, die im Wesentlichen aus einer Dammrolle 16 und einer hinter der Dammrolle 16 angeordneten Rodeschar besteht. Das von der Rodevorrichtung 1 aufgenommene gerodete Gemisch wird hinter der Rodevorrichtung 1 einem Stabsiebförderband 2 zugeleitet. Das Stabsiebförderband besteht in an sich bekannter Ausgestaltung aus in Fahrtrichtung F hintereinander parallel beabstandet angeordneten, vorzugsweise aus Metall hergestellten Stäben.

Der Abstand der Stäbe wird bei herkömmlichen Erntemaschinen in der Regel auf die vorrangig zu bearbeitenden Bodengemische eingestellt. Für unterschiedliche Beschaffenheit im Hinblick auf sandige und/oder lehmige Strukturen sowie feuchte oder trockene Konsistenz sind üblicherweise bei herkömmlichen Erntemaschinen Stabsiebförderbänder unterschiedlicher Stababstände verfügbar, die gegebenenfalls mit nicht unbeträchtlichem Montageaufwand für verschiedene Bodenbeschaffenheiten ausgetauscht werden müssen, was allerdings oftmals aus Zeitgründen unterbleibt.

Allgemein üblich ist es, dass das Stabsiebförderband 2 ein Lasttrum 3, auf dem das gerodete Gemisch aus Erntegut und Beimengungen von der Rodeschar 17 abgelegt wird, sowie über ein Leertrum 4 unterhalb des Lasttrums 3 verfügt. Lasttrum 3 und Leertrum 4 ergeben sich dadurch, dass das endlose Stabsiebförderband 2 über eine vordere Umlenkrolle 5 und eine hintere Umlenkrolle 6 geführt ist.

Aus der Figur 1 wird deutlich, dass zusätzlich zu der vorderen Umlenkrolle 5 und der hinteren Umlenkrolle 6, die selbstverständlich jeweils in Fahrtrichtung parallel beabstandet aus einer Mehrzahl von Rädern oder einer durchgehenden Welle bestehen können, das Stabsiebförderband 2 zusätzlich durch weitere Umlenkrollen 7 und 8 sowie Auflagerollen 9 und 10 geführt ist. Es entsteht somit, wie aus der Figur 1 deutlich wird, zwischen dem Lasttrum 3 und dem Leertrum 4 ein Zwischenraum 35.

In diesen Zwischenraum 35 ist erfindungsgemäß ein Transportband 11 angeordnet, welches über eine vordere Umlenkrolle 12 und eine hintere Umlenkrolle 13 in Fahrtrichtung F gesehen geführt ist. Zusätzlich sind zwei Auflagerollen 14 und 15 unterhalb des Lasttrums des Transportbandes 11 platziert. Im Leertrum ist das Transportband 11 durch eine weitere Auflagerolle 31 geführt.

Die Geschwindigkeit es Transportbandes 11, welches über die Umlenkrolle 13 mittels eines üblichen Motors angetrieben ist, wird durch eine geeignete Steuereinheit 33 je nach Anforderung eingestellt.

Darüber hinaus ist am Transportband 11 eine Verstellvorrichtung 32 platziert. Die Verstellvorrichtung 32 dient dazu, den Abstand zwischen dem Lasttrum des Transportbandes 11 und dem Lasttrum 3 des Stabsiebförderbandes 2 variabel zu gestalten. Wie aus der Figur 1 ersichtlich ist, kann mittels der Verstellvorrichtung 32 ein minimaler Abstand A1 und ein maximaler Abstand A2 eingestellt werden, wobei ein Bereich von 3 bis 30 cm sich in der Praxis als optimaler Einstellbereich herausgestellt hat. Zur Verdeutlichung ist in der Figur 1 die untere Stellung mit dem größten Abstand A2 zwischen Transportband 11 und Stabsiebförderband 2 gestrichelt dargestellt.

Durch die erfindungsgemäße Gestaltung mittels des Einbaus des zusätzlichen Transportbandes 11 in den Zwischenraum 35 des Stabsiebförderbandes 2 wird erreicht, dass auf dem Stabsiebförderband 2 jederzeit ein gleich bleibender Teppich aus Erdreich vorhanden ist, der einen schonenden Transport des Erntegutes gewährleistet. Der gleich bleibende Teppich aus Erdreich ist zum einen für den schonenden Transport des Erntegutes wie beispielsweise Kartoffeln oder Rüben vorteilhaft, gleichzeitig wird verhindert, dass ein zu hoher Anteil an Erdreich im auf dem Stabsiebförderband abgelegten gerodeten Gemisch eine Verstopfung innerhalb der Erntemaschine hervorruft.

Wird beispielsweise durch die Rodevorrichtung 1 viel Erde auf dem Stabsiebförderband 2 abgelegt, kann die Umlaufgeschwindigkeit des Transportbandes 11 erhöht werden, um die durch die Zwischenräume der Stäbe des Stabsiebförderbandes fallende Erde in größerer Menge abzutragen. Zusätzlich kann in einem solchen Fall, falls die erhöhte Geschwindigkeit nicht ausreichen sollte, der Abstand zwischen Transportband 11 und Stabsiebförderband 2 vom minimalen Abstand A1 auf den maximalen Abstand A2 oder einen Wert dazwischen vergrößert werden. In der Praxis hat es sich als ausreichend erwiesen, wenn die Verstellung des Abstandes des Transportbandes 11 vom Stabsiebförderband 2 im in Fahrtrichtung hinteren Bereich hinter den Auflagerollen 15 und 31 erfolgt. Die Verstellung im hinteren Bereich vereinfacht darüber hinaus die konstruktive Gestaltung der Verstellvorrichtung 32.

Die Anordnung des Transportbandes 11 kann zur weiteren Optimierung der Arbeitsweise im Hinblick auf einen erhöhten Erntedurchsatz gegebenenfalls dadurch verändert werden, dass in Fahrtrichtung gesehen zwischen dem vorderen Ende des Transportbandes 11 und dem vorderen Ende des Stabsiebförderbandes 2 ein Abstand D im Bereich von 5 cm - 50 cm variabel einstellbar ist, was durch eine nicht näher dargestellte Verstellvorrichtung geschehen kann.

Ein größerer Abstand D eröffnet die Möglichkeit, schon zu Beginn unmittelbar nach der Ablage des gerodeten Gemisches auf dem Stabsiebförderband 2 insbesondere bei hohem Erdanteil nicht benötigte Erde gleich zum Boden abzusieben.

Je nach Verwendung der erfindungsgemäßen Erntemaschine hat es sich darüber hinaus als vorteilhaft erwiesen, das Transportband 11 unterschiedlich auszubilden. Eine Möglichkeit besteht darin, das Transportband 11 geschlossen auszuführen, so dass das gesamte auf das Transportband fallende Erdreich zum Ende weiter transportiert wird. Darüber hinaus besteht die Möglichkeit, das Transportband 11 analog der Bauform des Stabsiebförderbandes 2 aus parallel beabstandeten vorzugsweise metallischen Stäben aufzubauen. Die Stäbe können einen Abstand von 5 mm - 50 mm aufweisen, so dass bei dieser Bauform auf dem Transportband abgelegtes Erdreich teilweise durch die Zwischenräume der Stäbe weiter auf den Boden fallen kann.

Der Antrieb des Transportbandes und dessen Regelung mittels der Steuereinheit 33 kann ebenso wie die Abstandseinstellung des Transportbandes mittels der Verstellvorrichtung 32 elektrisch oder hydraulisch vorgenommen werden, je nachdem welche Möglichkeiten das vor die Erntemaschine gespannte Zugfahrzeug bereitstellt. Selbstverständlich ist es in diesem Zusammenhang auch möglich, die erfindungsgemäße Erntemaschine mit einem eigenständigen Antrieb zu versehen.

Um die Variabilität der erfindungsgemäßen Erntemaschine und den Automatisierungsgrad zusätzlich zu erhöhen, hat es sich zur Erzielung optimaler Ernteerträge entsprechend einer vorteilhaften Weiterbildung der Erfindung als hilfreich erwiesen, im Bereich der hinteren Umlenkrolle 6 des Stabsiebförderbandes 2 eine Wiegevorrichtung 30 anzuordnen.

Die Wiegevorrichtung 30 dient dazu, das auf dem Stabsiebförderband 2 transportierte gerodete Gemisch gewichtsmäßig einzuschätzen und in Abhängigkeit des Ergebnisses sowohl die Geschwindigkeit des Transportbandes 11 mittels der Steuereinheit 33 als auch gegebenenfalls den Abstand zwischen Transportband 11 und Stabsiebförderband 2 durch die Verstellvorrichtung 32 zu variieren. Je nach Anteil der Erdbeimengung auf dem Stabsiebförderband 2 werden die genannten Parameter entsprechend programmierter Vorgaben nach Erfahrungswerten so geregelt, dass wie oben erwähnt, immer ein gleich bleibender Erdreichteppich zum schonenden Transport des Erntegutes vorhanden ist.

Zur Erzielung optimaler Erntemengen kann darüber hinaus durch die Wiegevorrichtung 30 mittels einer Kontroll- und Ansteuereinheit 29 die Geschwindigkeit des Zugfahrzeuges für die Erntemaschine beeinflusst werden.

Durch die geschilderte spezielle Ausgestaltung der erfindungsgemäßen Erntemaschine ist es nunmehr möglich, dass viele in der Landwirtschaft tätigen Betriebe oder Lohnunternehmen bewirtschaftete Flächen mit unterschiedlichsten Bodenbedingungen optimal bearbeiten können.

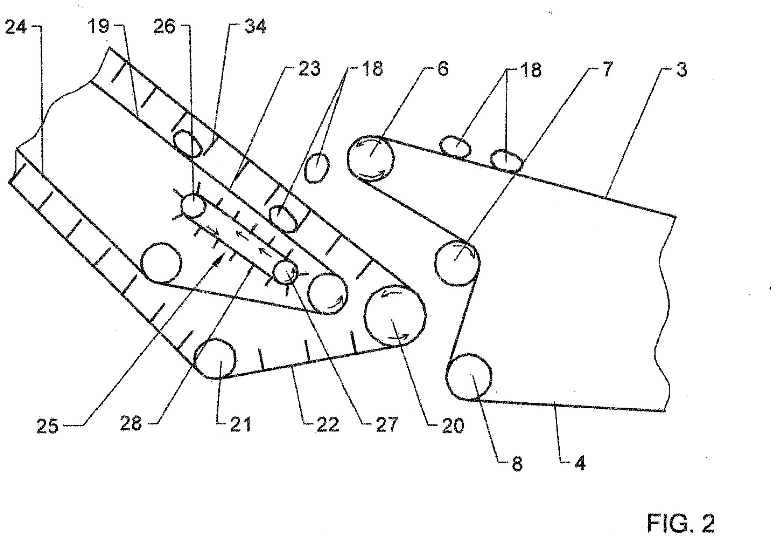

Bei einigen technischen Realisierungen von Erntemaschinen wird dem in Figur 1 dargestellten Stabsiebförderband 2 an seinem in Fahrtrichtung gesehen hinteren Ende ein weiteres zusätzliches Förderband 19 nachgeschaltet. Das Förderband 19 ist mittels einer vorderen Umlenkrolle 20 und einer in der Figur 2 nicht näher dargestellten hinteren Umlenkrolle sowie beispielsweise einer Umlenkrolle 21 so geführt, dass sich im Bereich zwischen dem Lasttrum 23 des Förderbandes 19 und dem entsprechenden Leertrum 24 in Analogie zur Figur 1 ein Zwischenraum ergibt.

In diesen Zwischenraum wird entsprechend einer vorteilhaften Weiterbildung des Erfindungsgegenstandes ein sogenanntes Erdpolstertransportband 25 eingesetzt. Das Erdpolstertransportband 25 ist ein relativ kurzes endloses über die Umlenkrolle 26 und die Umlenkrolle 27 geführtes, vorteilhafterweise geschlossenes Förderband. Das Erdpolstertransportband 25 dient, wie der Name angibt, dazu, im Bereich des Übergangs zwischen dem Ende des Stabsiebförderbandes 2 im Bereich seiner Umlenkrolle 6 und dem Beginn des nachgeschalteten Förderbandes 19 ein Erdpolster zu schaffen, so dass das Erntegut 18 ohne Druckstellen oder sonstige Beschädigungen auf das Förderband 19 überführt und weiterer nachgeschalteter Bearbeitung zugeleitet werden kann.

Die geschilderte erfindungsgemäße Weiterentwicklung ist insbesondere dann von Vorteil, wenn das Förderband 19 in Analogie zum Stabsiebförderband 2 auch aus einzelnen Stäben mit entsprechendem Abstand ausgebildet ist, was immer dann der Fall ist, sofern für bestimmtes Erntegut zusätzlicher Siebbedarf im Bereich des Förderbandes 19 bestehen sollte. In der Praxis hat es sich als ausreichend erwiesen, wenn das Erdpolstertransportband 25 im Innenraum des Förderbandes 19 eine Länge von 30 cm - 100 cm aufweist.

Für den Fall, dass das Förderband 19 eine größere Steigung von 30 Grad und mehr aufweisen sollte, ist es - wie dies aus der Figur 2 deutlich wird - vorteilhaft, wenn das Erdpolstertransportband 25 an seiner Außenseite mit einer Mehrzahl von nach außen vorstehenden rechtwinklig zur Bewegungsrichtung des Erdpolstertransportbandes 25 angeordneten Mitnahmestegen 28 versehen ist. Sie sorgen dafür, dass die Erde auf dem Erdpolstertransportband 25 nicht entgegen der Umlaufrichtung des Bandes nach unten wegrutscht und somit den Polstereffekt im Bereich des Überganges von Stabsiebförderband 2 zum Förderband 19 herabsetzt.

In der Figur 2 ist darüber hinaus um das Förderband 19 umlaufend ein Grobkrautband 22 gezeigt, welches mittels der vorderen Umlenkrolle 20 und der weiteren Umlenkrolle 21 geführt ist und dazu dient, die Ablage von geerntetem Grobkraut auf dem Transportband 19 zu verhindern. Gleichzeitig dient das Grobkrautband 22 durch an diesem angeordnete Haltestege 34, die vorstehend am Grobkrautband 22 nach innen zum Förderband 19 gerichtet sind, dazu, das auf das Förderband 19 abgelegte Erntegut 18 daran zu hindern, aufgrund der Steigung des Transportbandes 19 entgegen der vorgesehenen Transportrichtung nach unten zu rutschen.

Es ist somit festzuhalten, dass gegenüber allen aus dem Stand der Technik bekannten Erntemaschinen der Gegenstand der Erfindung den Vorteil bietet, dass die Stabteilung des Stabsiebförderbandes 2 nunmehr kompromisslos der festgelegten Kartoffelmindestgröße angepasst werden kann.

Darüber hinaus ist ein schonender Transport des Erntegutes zusätzlich zu einer effizienten Trennung des gerodeten Gemisches in Erntegut und Beimengungen wie Erdreich, Steine, etc. gegeben. Ein Austausch des Stabsiebförderbandes 2 wie bislang gelegentlich praktiziert zur Anpassung an unterschiedliche Bodenbeschaffenheiten, ist überflüssig.

Darüber hinaus kann die Verwendung der angesprochenen Wiegevorrichtung 30 und die durch die Wiegevorrichtung 30 gemessene Kenngröße dazu beitragen, die Effizienz der gesamten Erntemaschine durch Anpassung an die vorhandenen Bodenrahmenbedingungen entscheidend zu erhöhen.

### Bezugszeichenliste:

| | |
|---|---|
| 1 | Rodevorrichtung |
| 2 | Stabsiebförderband (SFB) |
| 3 | Lasttrum (SFB) |
| 4 | Leertrum (SFB) |
| 5 | vordere Umlenkrolle (SFB) |
| 6 | hintere Umlenkrolle (SFB) |
| 7 | Umlenkrolle (SFB) |
| 8 | Umlenkrolle (SFB) |
| 9 | Auflagerolle (SFB) |
| 10 | Auflagerolle (SFB) |
| 11 | Transportband (TB) |
| 12 | vordere Umlenkrolle (TB) |
| 13 | hintere Umlenkrolle (TB) |
| 14 | Auflagerolle (TB) |
| 15 | Auflagerolle (TB) |
| 16 | Dammrolle |
| 17 | Rodeschar |
| 18 | Erntegut |
| 19 | Förderband (FB) |
| 20 | vordere Umlenkrolle GKB) |
| 21 | Umlenkrolle (GKB) |
| 22 | Grobkrautband (GKB) |
| 23 | Lasttrum (FB) |
| 24 | Leertrum (FB) |
| 25 | Erdpolstertransportband (EPTB) |
| 26 | Umlenkrolle (EPTB) |
| 27 | Umlenkrolle (EPTB) |
| 28 | Mitnahmesteg |
| 29 | Kontroll-und Ansteuereinheit |
| 30 | Wiegevorrichtung |
| 31 | Auflagerolle (TB) |
| 32 | Verstellvorrichtung |
| 33 | Steuereinheit |
| 34 | Haltesteg |
| 35 | Zwischenraum |
| A1 | minimaler Abstand Transportband 19 / Stabsiebförderband 2 |
| A2 | maximaler Abstand Transportband 19/ Stabsiebförderband 2 |
| D | Abstand vordere Umlenrolle (TB) 12 / vordere Umlenkrolle (SFB) 5 |

## Patentansprüche

1. Erntemaschine für Feldfrüchte wie Kartoffeln, Rüben oder dergleichen mit einer Rodevorrichtung (1) und mindestens einem, das gerodete Gemisch aus Feldfrüchten und Beimengungen aufnehmenden endlosen Stabsiebförderband (2), welches ein oberes, zum Transport des gerodeten Gemisches vorgesehenes Lasttrum (3) und ein unteres Leertrum (4) aufweist, wobei das Stabsiebförderband (2) über mindestens eine in Fahrtrichtung gesehenen vordere Umlenkrolle (5) und eine hintere Umlenkrolle (6) geführt ist und durch einen Antrieb in seiner Geschwindigkeit variierbar ist,
**dadurch gekennzeichnet, dass**
im Zwischenraum (35) zwischen Lasttrum (3) und Leertrum (4) des Stabsiebförderbandes (2) ein zum Lasttrum (3) im Abstand veränderbar einstellbares und in seiner Geschwindigkeit variierbares Transportband (11) zur Aufnahme von durch das Stabsiebförderband (2) abgesiebten Beimengungen angeordnet ist.

2. Erntemaschine nach Anspruch 1,
**dadurch gekennzeichnet, dass**
das Transportband (11) an seinem in Fahrtrichtung gesehen vorderen, der vorderen Umlenkrolle (5) des Stabsiebförderbandes (2) benachbarten Ende einen festen Abstand zum Lasttrum (3) im Bereich von 3 bis 10 cm aufweist.

3. Erntemaschine nach einem der Ansprüche 1 oder 2,
**dadurch gekennzeichnet, dass**
das Transportband (11) an seinem in Fahrtrichtung gesehen hinteren, der hinteren Umlenkrolle (6) des Stabsiebförderbandes (1)
benachbarten Ende durch eine Verstellvorrichtung (32) einen variablen Abstand im Bereich von 3 bis 30 cm aufweist.

4. Erntemaschine nach einem der Ansprüche 1 bis 3,
**dadurch gekennzeichnet, dass**
der Abstand (D) des vorderen Endes des Transportbandes (11) von Mittelpunkt der vorderen Umlenkrolle (5) des Stabsiebförderbandes (2) im Bereich von 5 cm - 50 cm einstellbar ist.

5. Erntemaschine nach einem der Ansprüche 1 bis 4,
**dadurch gekennzeichnet, dass**
die Fläche des Transportbandes (11) geschlossen ist.

6. Erntemaschine nach einem der Ansprüchen 1 bis 4,
**dadurch gekennzeichnet, dass**
das Transportband (11) aus parallel nebeneinander angeordneten Stäben mit einem Stababstand im Bereich von 5 bis 50 Millimetern aufgebaut ist.

7. Erntemaschine nach einem der Ansprüche 1 bis 6,
**dadurch gekennzeichnet, dass**
die hintere Umlenkrolle (6) des Stabsiebförderbandes (2) eine Wiegevorrichtung (30) zur Ermittlung des auf dem Stabsiebförderband (2) transportierten gerodeten Gemisches aufweist, die mit einer Regelvorrichtung zur Steuerung der Geschwindigkeit und Höhe des Transportbandes (11) gekoppelt ist.

8. Erntemaschine nach Anspruch 7,
**dadurch gekennzeichnet, dass**
die Wiegevorrichtung (30) mit einer Kontroll- und Ansteuereinheit (29) für die Geschwindigkeit eines Zugfahrzeuges für die Erntemaschine gekoppelt ist.

9. Erntemaschine nach einem der Ansprüche 1 bis 8,
**dadurch gekennzeichnet, dass**
in Fahrtrichtung gesehen hinter dem Stabsiebförderband (2) ein Förderband angeordnet ist, welches ein oberes Lasttrum (23) und ein unteres Leertrum (24) aufweist, wobei das Förderband (19) über mindestens eine in Fahrtrichtung gesehen vordere Umlenkrolle (20) und eine hintere Umlenkrolle geführt ist.

10. Erntemaschine nach Anspruch 9,
**dadurch gekennzeichnet, dass**
im Zwischenraum zwischen Lasttrum (23) und Leertrum (24) des Förderbandes (19) ein Erdpolstertransportband (25) angeordnet ist.

11. Erntemaschine nach Anspruch 10,
**dadurch gekennzeichnet, dass**
das Erdpolstertransportband (25) eine Länge im Bereich von 30 bis 100 Zentimetern
aufweist.

12. Erntemaschine nach einem der Ansprüchen 10 oder 11,
**dadurch gekennzeichnet, dass**
die Außenseite des Ertpolstertransportbandes (25) mit einer Mehrzahl von nach außen vorstehenden, rechtwinkelig zur Bewegungsrichtung des Erdpolstertransportbandes (25) angeordneten Mitnahmestegen (28) versehen ist.
